# EUROPEAN PATENT SPECIFICATION

(11) **EP 0 689 960 B1**
(45) Date of publication and mention of the grant of the patent: **08.04.1998**
(21) Application number: 94110316.0
(22) Date of filing: 02.07.1994
(51) Int. Cl.: B60Q 1/30

(54) **Foldable triangular warning light mounted on the third braking light of an automobile**
Auf der dritten Bremsleuchte eines Fahrzeuges montierte, zusammenklappbare dreieckige Warnleuchte
Flux monté sur un triangle pliable pour le troisième feux indicateur de freinage d'un véhicule

(43) Date of publication of application: 03.01.1996
(73) Proprietor: HOWARD-LLOYDE ENTERPRISE CO., LTD., Taichung 40315 (TW)
(72) Inventor: Yang, Chang-An, Taipei (TW)
(74) Representative: Beil, Hans Chr., Dr.

(56) References cited:
- US-A- 4 825 191
- US-A- 5 126 926

## Description

### BACKGROUND OF THE INVENTION

The present invention relates to a structure of a variable triangular failure warning light for a third braking light of an automobile, basically utilizing a third braking light which can be folded into a triangular failure warning light comprising a three-section type third braking light of an elongate strip shape, consisting of a middle section and outer sections which are movable with their outer ends towards each other by hinge means, the middle section being mounted on a supporting plate and characterized by the features as claimed.

Since a third braking light of an automobile can warn the other automobiles behind when braking, and the number of automobiles in recent years has increased and all the roads and freeways are crowded, the third braking lights have become a popular device for driving more safely, and also have become standard equipment for many automobiles.

Further, a triangular warning sign of reflection type which can be put on the road behind the automobile which has a failure, is usually kept in rear trunk of an automobile.

Hence, when an automobile has a failure, the driver must first park the failed automobile in a proper position, and then take the triangular warning sign from the rear trunk of the automobile, and put it on the road behind the automobile at a proper distance to warn the other automobiles behind.

The third braking lights have become necessary equipment for an automobile, while the conventional triangular failure warning signs are not convenient in use and have many disadvantages: for example, A: the sign is not easy to be seen by the drivers of the automobiles behind the failed automobile due to the fact that the triangular failure warning sign is placed low on the ground; B: the warning effect of the conventional triangular failure warning sign is poor since said sign is of a reflection type; C: when using the conventional warning sign, the driver must open the rear trunk, then take out the warning sign and fold it into triangular shape, walk a distance to put it on the ground behind the automobile, and after the use of the sign is ended, the driver must return the warning sign to the rear trunk, which will affect the willingness of the driver to use the conventional triangular sign. Hence, it is necessary to improve the conventional triangular failure sign.

US-A-4.825.191 discloses a structure of a variable triangular warning light for a third braking light which can be folded into a triangular failure warning light and the middle section of which is mounted on a supporting plate which in turn can be mounted on a suited surface of the rear of a car. This kind of mounting is not very convenient and does not really match with usual car designs. Furthermore the structure has no protection when not in the warning triangular form.

The aforesaid disadvantages can be avoided by this invention.

### SUMMARY OF THE INVENTION

Hence, the invention improves the existing third braking light, mostly of the "LED" type, when placed in the rear body or in the rear turbulence plate of an automobile such that when automobile failure occures, the third braking light can be converted into a flashing triangular warning light.

It is a main object of the present invention to provide a structure for the third braking light which can be pulled out and folded into a triangular failure warning light to add a new function to the third braking light.

It is another object of the present invention to provide a triangular failure warning light which can be lighted and thus improves the poor warning effect of the conventional warning sign of reflection type.

It is another object of the present invention to provide a triangular failure warning light which can stand on a part of the rear body of an automobile elevated over the ground or on the rear turbulence plate of an automobile to enhance the visibility of the triangular warning light to warn the automobiles behind.

It is another object of the present invention to provide a self-lighting triangular warning light which can be put on a higher position to prevent the driver of the failure automobile from walking back and forth for a distance to put and to return the conventional failure warning sign.

These objects are achieved by a structure of a three-section type braking light of an elongate strip shape the outer sections can be moved towards each other which is hidden within the rear turbulence plate or the rear trunk of a car and can be pushed outward, the outer sections being held to the supporting plate by releasable means and bearing means to attract each other when folded up and the supporting plate being mounted in a groove of the rear turbulence plate or the rear trunk cover of a car by means of at least two sliding members inserted in holes and held there, when not in use, by lock means.

### BRIEF DESCRIPTION OF THE INVENTION

A complete understanding of the invention may be obtained from the following detailed description when read in conjunction with the appended drawings, in which:
Fig. 1 is a perspective view of one embodiment of the present invention in hidden condition;
Fig. 2 is a perspective view showing the present invention when in use;
Fig. 3 is a top view showing the section of the present invention in hidden condition;
Fig. 4 is a side view showing the section of the present invention in hidden condition;
Fig. 5 is a top view showing the section of the present invention when in use;
Fig. 6 is a side view showing the section of the present invention when in use;
Fig. 7A-7D are schematic views showing the action of the live lock member of the present invention;
Fig. 8 is a perspectively sectional view of the present invention;
Fig. 9 shows another embodiment of the appearance of the present invention applied to a rear trunk of a car when not in use;
Fig. 10 shows a sectional view of the present invention applied to a rear trunk of a car when not in use;
Fig. 11 shows a sectional view of the present invention applied to a rear trunk of a car when in use;
Fig. 12 shows a perspective view of the present invention applied to a rear trunk of a car when in use;
Fig. 13 shows a schematic view of the present invention applied to a rear trunk of a car when in use;
Fig. 14 shows a schematic view of the present invention applied to a rear door of a wagon when in use.

### DETAILED DESCRIPTION OF THE DRAWINGS

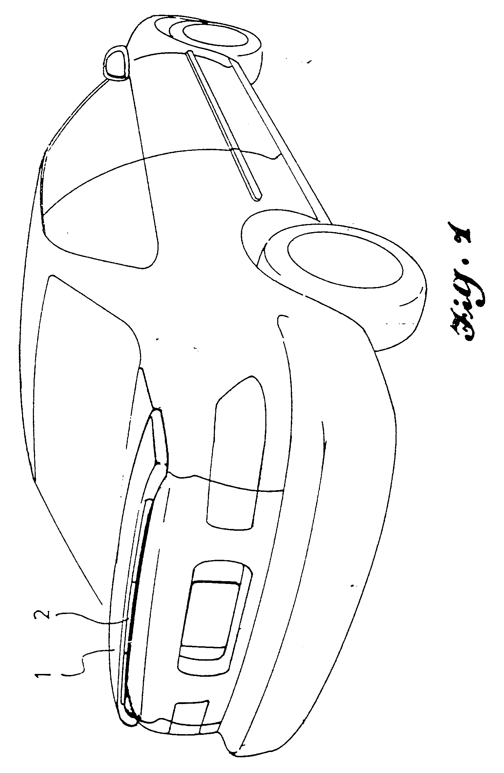

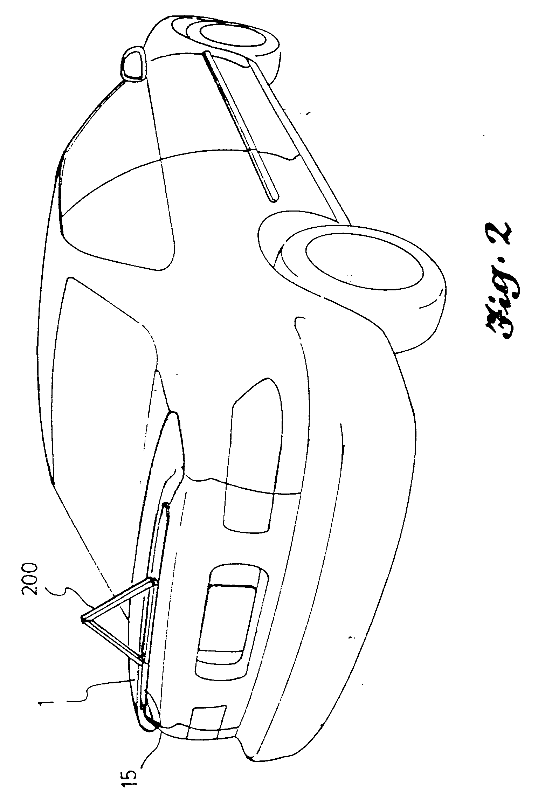

Please refer to Figs. 1 and 2. As shown in Fig. 1, a three-section type third braking light (2) according to the present invention, hidden on the lower portion of a rear turbulence plate (1), serves as a third braking light in normal conditions (and its outer sections even may be used as direction change indicators). When the automobile is in failure or has an accident and has to be stopped in the middle or the side of the road the three-section type third braking light (2) can be pulled outward and the left and right sections (22) of the three-section type third braking light (2) can be moved to form an equilateral triangular failure warning light (200) which can cooperate with the automobile accident flash light to effectively and accurately warn the other automobiles behind by one or multiple light live bars.

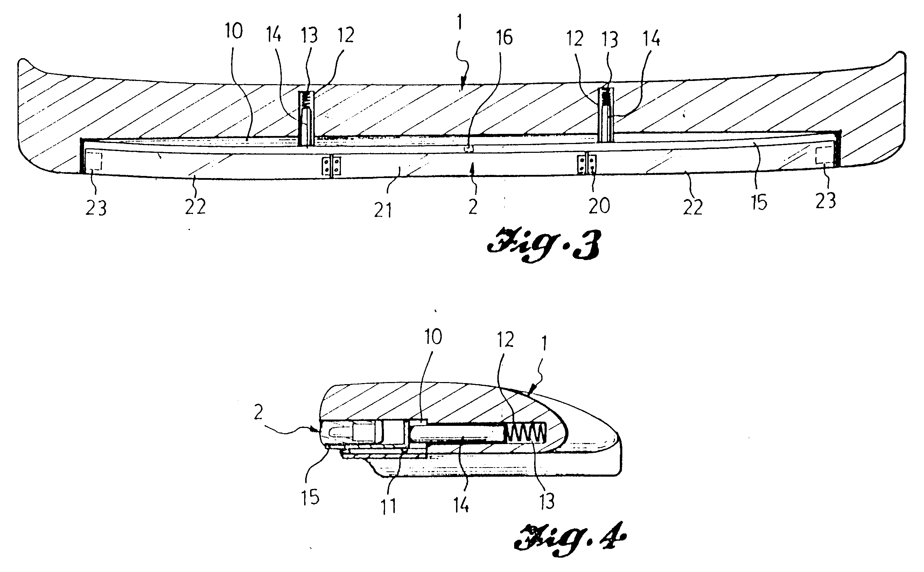

Please refer to Figs. 3 and 4. The embodiment shown in Figs. 3 and 4 can accomplish the function mentioned above. The three-section type third braking light (2) according to present invention is hidden on the lower portion of the rear turbulence plate (1), and its exposed flashable front surface and the turbulence plate form an integral configuration. The three-section type third braking light (2) is mounted on a supporting plate (15), and the middle section (21) of the light (2) is connected to the middle portion of the supporting plate (15) while the left and right sections (22) of the light (2) are held on the plate (15) by means of the magnetic blocks (23) which are respectively provided on the outer ends of the left and right sections and can attract the plate (15) (the plate (15) is made of steel material). The plate (15) is connected with at least two sliding members (14) of which each is inserted into tubular hole (12) of the rear turbulence plate (1). Within each hole (12), is provided a spring (13) to produce a reverse spring pressure acting on the inserted sliding member (14). A live lock member (16) is provided right under the plate (15); said member (16) will perform engagement and disengagement motions when subjected to more than two pressing motions including forward and backward pressing. A base plate (11) is provided on the bottom of the lower groove (10) of the rear turbulence plate (1) and can be used to restrict the aforesaid members and motions thereof under the condition that the aforesaid members are associated with the rear turbulence plate (1).

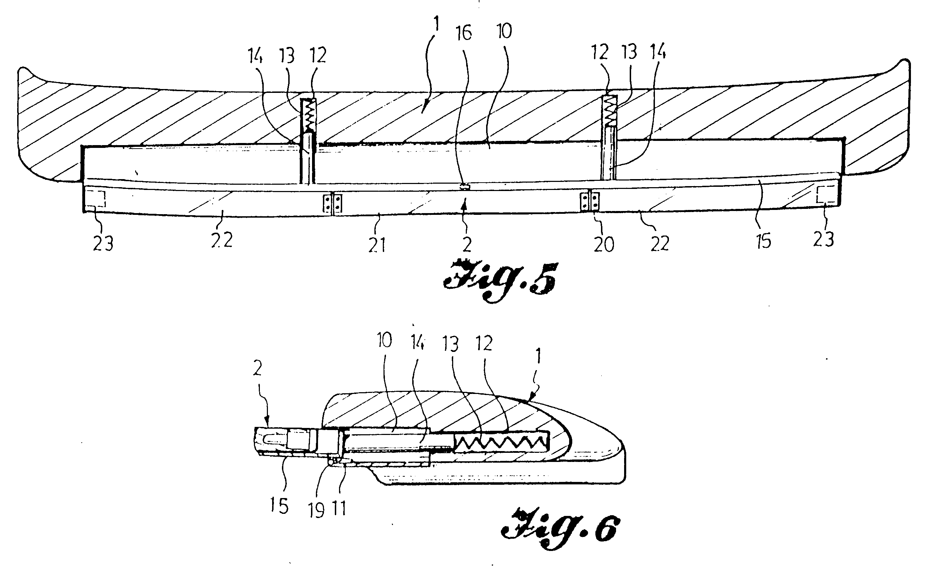

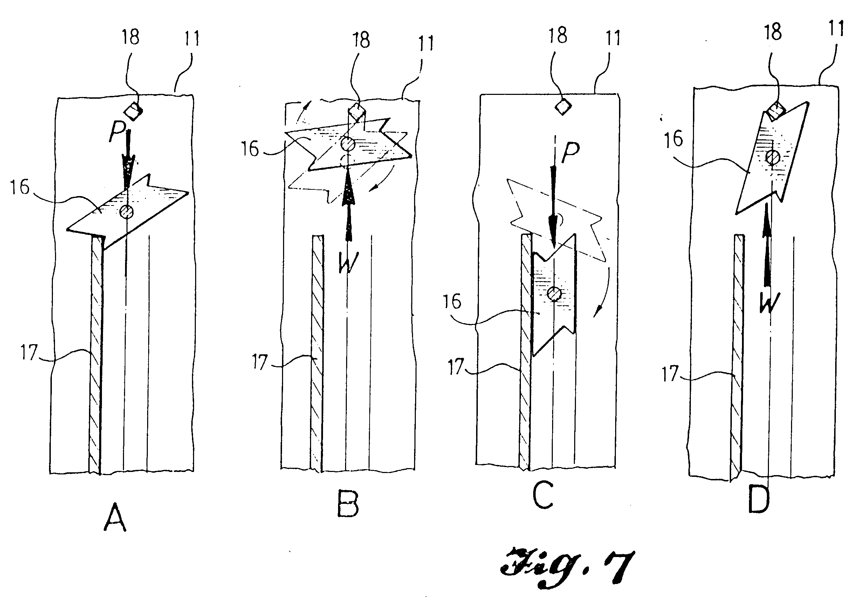

Please refer to Fig. 5 and 6. When an automobile is in failure or an accident and must be stopped in the driver can press the middle section (21) such that plate (15) brings the live lock member (16) to be pressed inwardly, and when driver stops pressing the middle section, the lock member (16) is released; at this time, the spring (13) can produce an effective outward pressure to push the plate (15) with the three-section type third braking light (2) outward such that the plate (15) is stopped at the engagement edge (19) of the base plate (11). Since the middle section (21) of the light (2) is fixed on the plate (15) while the left and right sections (22) of the light (2) are attracted and mounted on the plate (15) by means of the magnetic blocks (23) and are attached to the middle section (21) by means of hinges (20) the left and right sections can be lifted up such that the two magnetic blocks (23) can be attracted each other to form an equilateral triangular failure warning light (200) which can flash with the automobile accident flash light as shown in Fig. 2.

After the condition of temporary stop of the automobile is ended, one only needs to return the left and right sections (22) of the light (200) to original horizontal position and the magnetic blocks (23) will attract the plate (15) again, and then the driver can push the plate (15) into the lower grove (10) of the rear turbulence plate (1), and the live lock member (16) will return to the lock up position again so as to obtain the original third braking light (2).

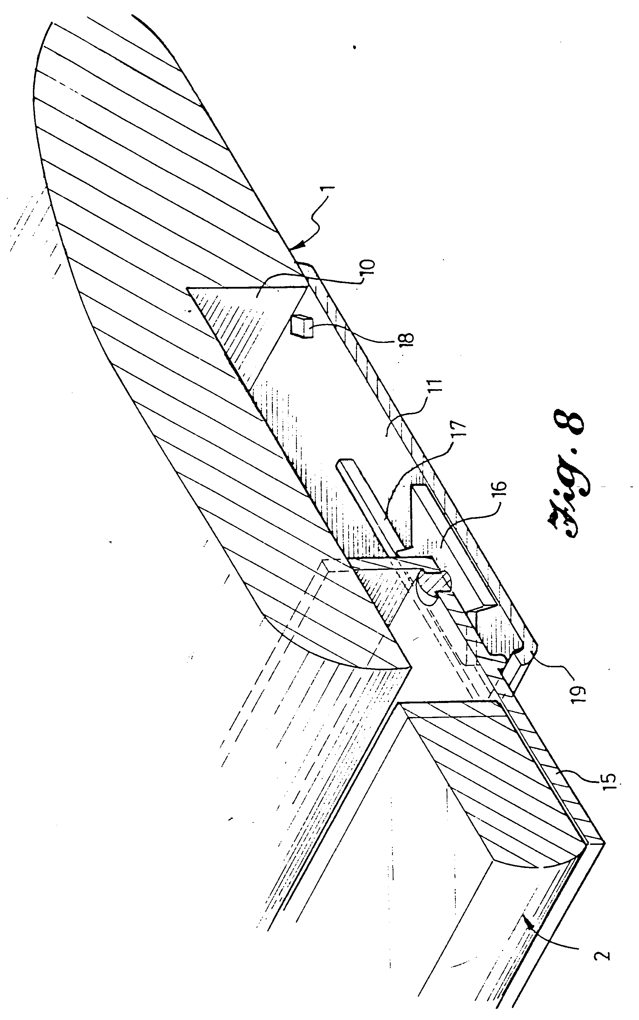

The aforesaid motion of the live lock member (16) can be performed as illustrated in Figs. 7A-7D. From Figs. 7A-7 it can be found that the live lock member (16) is pivotedly mounted under the plate (15) and is a rotatable star shaped block. By means of a guide groove wall (17) on the base plate (11) and a stop projection (18) on the front end of base plate (11), motion of engagement or disengagement of the live lock member can be obtained. As shown in Fig. 7A, the live lock member (16) and the plate (15) are subjected to a pressure (P) of spring (13) such that the lock member (16) is engaged with the guide groove wall (17) of base plate (11). As shown in Fig. 7B, after the plate (15) and the live lock member (16) are subjected to a reverse manual force (W), the live lock member (16) can be rotated and deflected under the function of the stop projection (18). As shown in Fig. 7C, when the manual force (W) disappears, pressure (P) will push plate (15) with the live lock member (16) outward and the lock member (16) is guided by and slides along the guide groove wall (17) such that the plate (15) can project outwards unter the pressure (P). If applying force (W) again, as shown in Fig. 7D, the live lock member (16) will slide along the guide groove wall (17) and will deflect when encountering the stop projection (18). As shown in Fig. 7A, when force (W) disappears again, the live lock member (16) will return to lock up position.

The shape of the aforesaid live lock member (16) can be a rectangular shape and is provided with two opposite cut-outs of scalene shape respectively at the two ends thereof.

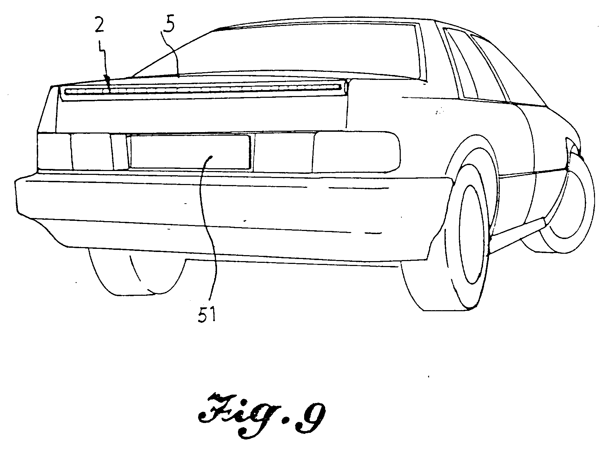

Please refer to Figs. 9, 13 and 14 showing a car without a rear turbulence plate and a hidden-type third braking light which is provided on the surface of the rear trunk of the car and can be folded into a triangular warning light to warn other cars behind when ther car has a failure or temporarily stops by the roadside to increase the safety of the car.

The hidden-type third braking light which can be folded into a triangular warning light basically utilizes the structure of the aforesaid three-section type third braking light with live lock members (16), guide wall (17), stop protection (18) etc. such that the third braking light can bounce out and be positioned and folded into a triangular warning light (200). The features of the structure shown in Fig. 9 reside in a hidden-type base seat (4) in the rear trunk (5) or the door plate of the rear openable door of a car, such as a wagon and a supporting seat (3) for the the third braking light to be folded up into a triangular warning light (200).

As shown in Figs. 9, 10, 11 and 12 the hidden-type base seat (4) can be fixed in a space (50) in the rear trunk cover (5) of a car. Said space is the internal space in the rear door of a wagon or the superfluous space above the middle recess (51) of a rear trunk; hence the hidden-type base seat will not occupy the normal space in the rear trunk for storing articles, The interior (40) in the hidden-type base seat (4) is used to receive a three-section braking light (2), a supporting seat (3), sliding members, resilient element, engagement elements etc. for bouncing and positioning the third braking light.

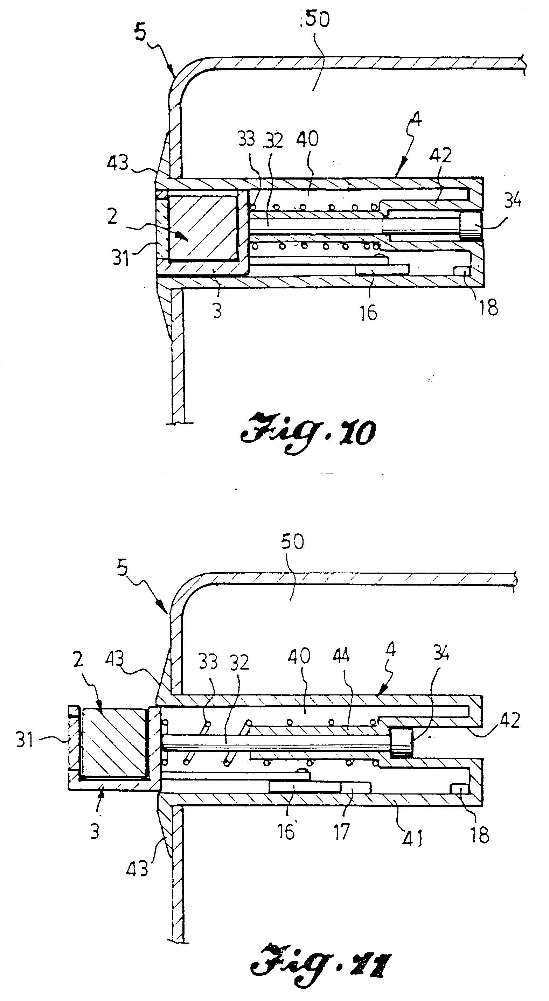

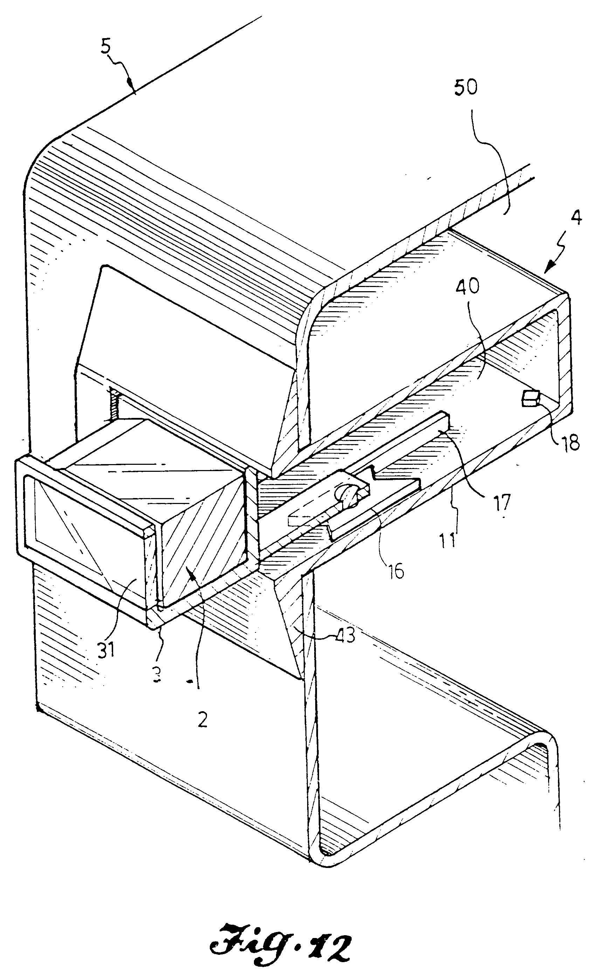

The hidden-type base seat (4) preferably has a partially closed interior (40) and by means of an outer frame (43) which is engaged with the periphery of an opening provided in the rear trunk cover (5) the base seat (4) can be connected with the rear trunk cover (5). The supporting seat (3) used to support the third braking light (2) is an elongate carrier of which the rear side is connected with a plurality of sliding members (32) each being placed in a slideway (44) and slidable therein. A spring (33) is wound on said slideway (44). The sliding member (32) has an engagement end (34) having larger diameter which is exposed outside of the rear side of the hidden-type base seat (4). Preferably an engagement hole (42) is provided to limit the movement distance of the engagement end (34). As shown in Figs. 10 and 11, by means of the engagement end (34) cooperating with the spring (33) the supporting seat (3) and the third braking light (2) can be bounced out of the hidden-type base seat (4) and be positioned. As shown in Fig. 12 the bouncing of the supporting seat and the third braking light can also use the aforesaid means, i.e. a stop protection (18), a guide groove (17) and a live lock member (16) connected to the supporting seat (3). The function of bouncing or hiding the third braking light then can be obtained by pushing the supporting seat (3) from the outside of this supporting seat (3). Furthermore the front side of the supporting seat (3) can be formed as a shade (31) with diaphaneity which can protect the three-section type braking light (2) and also has the transparent effect.

The device of the present invention can be directly applied to a car during its manufacturing or can be an additional equipment to be bought by the consumer and to be additionally mounted on a car. In the first instance the hidden-type base seat (4) directly can be welded to the rear trunk cover (5) without the outer frame (43) to maintain the smooth curve of the outer surface of the rear trunk cover, while in the latter case the outer frame (43) is used for covering the edge of the opening which is made by cutting the rear trunk cover (5) to beautify the appearance of the rear trunk cover and to prevent water from leaking into the rear trunk. It likewise is possible to provide the complete structure in a casing to be applied as one element to the rear door of for example a wagon type car.

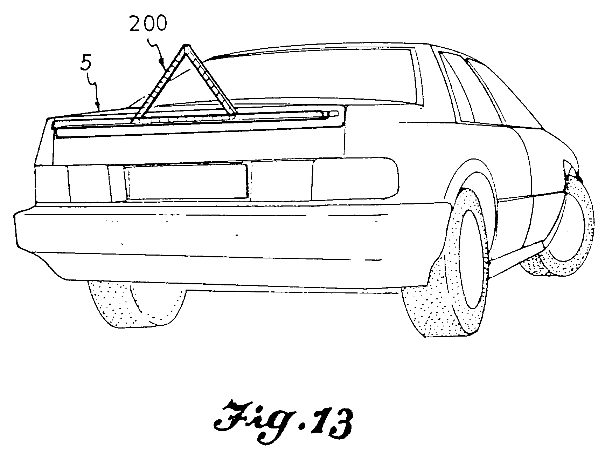

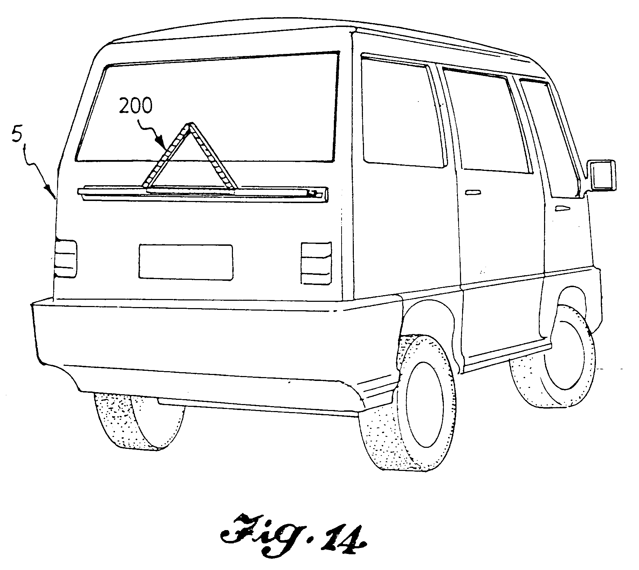

The device of the present invention can be applied to different types of cars, as shown in Figs. 13 and 14, as well as others such like motor coaches, station wagon etc.

While the present invention has been described above with respect to a preferred embodiment thereof, it should be understood that the present invention should not be limited only to the embodiment but various change or modifications may be made without departure from the scope of the invention as defined by the appended claims. For example it is possible to provide suitable means to release the third braking light from its non-use into the use situation by the driver still seated in the car and/or to provide means to automatically fold up the triangle for example by suited spring means. One furthermore can use the two outer parts of this third braking light as additional direction indicating lights.

The subject of the present invention has a firm structure and will not affect the appearance of the automobile, and further, can provide a novel and extraordinary function for a third braking light, and can overcome the disadvantages of a conventional triangular warning sign of reflection type.

## Claims

1. A structure of a variable triangular warning light for a third braking light of an automobile, basically utilizing a third braking light which can be folded into a triangular failure warning light, comprising:
a three-section type third braking light (2) of an elongate strip shape, consisting of a middle section (21) and outer sections (22) which are movable with their outer ends towards each other by hinge means (20),
the middle section (21) being mounted on a supporting plate (15), characterized in that it is hidden within the rear turbulence plate or the rear trunk of a car, and can be pushed outward, the outer sections (22) are hold to the supporting plate (15) by releasable means (23),
the outer sections (22) bearing means (23) to attract each other when folded up,
the supporting plate (15) being mounted in a groove (10/40) of the rear turbulence plate (1) or the rear trunk cover (1) of the automobile by means of at least two sliding members (14) inserted in holes (12) and held there, when not in use, by lock means (16).

2. A structure as claimed in any of claim 1 wherein said lock means (16) is a live lock member pivotly mounted unter the supporting plate (15), said live lock member being a rotatable member of a rectangular shape having two opposite scalene-shaped cut-outs respectively provided on two ends thereof and cooperating with a stop projection (18) and a guide wall (17) provided on said base plate (11) in Groove (11).

3. A structure as claimed in claim 2 wherein said guide walls (17) are grooves of base plate (11).

4. A strucure as claimed in one of claims 1 to 4 wherein springs (13) are provided for the outward movement of the structure.

5. A structure as claimed in claim 4 wherein the spring (13) is provided between the bottom of said holes (12) and the sliding members (14).

6. A structure as claimed in one of claims 1 to 5 wherein said third braking light is supported by a hidden-type base seat (4) in the rear trunk of a car or the internal space in the rear door of a car.

7. A structure as claimed in claim 6 wherein the base seat (4) has a partially closed interior (40) with a slideway (44) and an engagement hole (42) and the spring (33) is provided between a rear part of base seat (4) and supporting seat (3) around the sliding members (32).

8. A structure as claimed in claim 7 wherein the supporting seat (3) has a transparent front side (31).

9. A structure as claimed in claim 8 wherein the front side (31) provides a complete closing of the opening in the car body carrying the structure in its non-use position.

10. A structure as claimed in one of claims 1 to 9 wherein the base seat (4/11) consists of a closed casing to be affixed to the rear of a car.

11. A structure as claimed in one of claims 1 to 10 wherein said three-section type third braking light (2) utilizes a plurality of light emitting diodes, and can flash when being folded into a triangular failure warning light.

## Patentansprüche

1. Eine Struktur einer zusammenklappbaren dreieckigen Warnleuchte für eine dritte Bremsleuchte eines Fahrzeugs, die im wesentlichen ein drittes Bremslicht benutzt, das zu einer dreieckigen Warnleuchte aufgefaltet werden kann, umfassend:
ein dreigeteiltes drittes Bremslicht (2) mit länglicher Streifenform, bestehend aus einem Mittelteil (21), und Außenteilen (22), die mit ihren äußeren Enden gegeneinander mittels Gelenken (20) bewegt werden können, wobei der Mittelteil (21) auf einer Tragerplatte (15) montiert ist, dadurch gekennzeichnet, daß es in dem hinteren Spoiler oder dem Kofferraum eines Fahrzeugs eingebaut ist und nach außen bewegt werden kann, wobei die Außenteile (22) auf der Trägerplatte (15) durch lösbare Mittel (23) gehalten werden, die Außenteile (23) Mittel (23) tragen, um sie nach dem Auffalten gegeneinander zu halten, die Trägerplatte (15) in einer Mulde (10/40) des hinteren Spoilers (1) oder der hinteren Kofferraumabdeckung (1) des Fahrzeugs mittels mindestens zweier Gleitglieder (14), die in Aussparungen (12) eingelassen sind und dort, wenn sie nicht benutzt werden, durch Befestigungsmittel (16) gehalten werden, angeordnet ist.

2. Eine Struktur nach Anspruch 1, worin das genannte Befestigungsmittel (16) ein bewegliches Befestigungsglied ist, das drehbar unter der Trägerplatte (15) montiert ist und ein drehbares Glied von rechteckiger Form mit zwei gegenüberliegenden ungleichseitigen Ausschnitten an dessen Enden ist, das mit einem Haltevorsprung (18) und einer Führungswand (17) zusammenwirkt, die auf der Trägerplatte (11) in der Aussparung (10) angeordnet ist.

3. Eine Struktur gemäß Anspruch 2, worin die Führungswände (17) Rillen der Trägerplatte (11) sind.

4. Eine Struktur gemäß einem der Ansprüche 1 bis 4, worin Federn (13) für die nach außen gerichtete Bewegung der Struktur angeordnet sind.

5. Eine Struktur gemäß Anspruch 4, worin die Feder (13) zwischen dem Boden der genannten Aussparungen (12) und den Gleitgliedern (14) angeordnet ist.

6. Eine Struktur nach einem der Ansprüche 1 bis 5, worin das dritte Bremslicht getragen wird von einem versteckten Basisauflager (4) im Kofferraum eines Fahrzeugs oder dem inneren Raum in der rückwärtigen Tür eines Fahrzeugs.

7. Eine Struktur gemäß Anspruch 6, worin die Basisauflage (4) ein teilweise geschlossenes Inneres (40) mit einem Gleitweg (44) und einer Eingriffsöffnung hat und die Feder (33) zwischen einem hinteren Teil der Basisauflage (4) und der Trägerauflage (3) um die Gleitglieder (32) angeordnet ist.

8. Eine Struktur gemäß Anspruch 7, worin die Trägerauflage (3) eine transparente Frontseite (31) hat.

9. Eine Struktur gemäß Anspruch 8, worin die Frontseite (31) einen vollständigen Verschluß der Öffnung im Fahrzeugkörper, die die Struktur trägt, in der Ruhestellung ergibt.

10. Eine Struktur gemäß einem der Ansprüche 1 bis 9, worin die Basisauflage (4/11) aus einem geschlossenen Gehäuse besteht, das an der Rückseite eines Fahrzeugs befestigt werden kann.

11. Eine Struktur gemäß einem der Ansprüche 1 bis 10, worin das dreiteilige dritte Bremslicht (2) eine Vielzahl von lichtemittierenden Dioden verwendet und blinken kann, wenn es zu einer dreieckigen Warnleuchte aufgefaltet wird.

## Revendications

1. Structure de lampe d'avertissement triangulaire variable pour une troisième lampe de freinage d'une automobile, qui utilise à la base une troisième lampe de freinage que l'on peut déplier pour former une lampe d'avertissement de panne triangulaire, comprenant :
une troisième lampe de freinage (2) du type à trois tronçons sous forme d'une bande allongée, constituée d'un tronçon central (21) et de tronçons extérieurs (22) qui sont mobiles avec leurs extrémités extérieures l'un vers l'autre à l'aide de moyens d'articulation (20),
le tronçon central (21) étant monte sur une plaque de support (15),
caractérisé en ce qu'elle est cachée à l'intérieur de la plaque arrière anti-turbulences ou dans le coffre arrière d'une automobile, et qu'elle peut être poussée vers l'extérieur, les tronçons extérieurs (22) étant maintenus sur la plaque de support (15) par des organes libérables (23),
les tronçons extérieurs (22) portant des moyens (23) pour s'attirer mutuellement lorsqu'on les déplie,
la plaque de support (15) étant montée dans une rainure (10/40) de la plaque arrière anti-turbulences (1) du couvercle ou du couvercle de coffre arrière (1) de l'automobile au moyen d'au moins deux éléments coulissants (14) introduits dans des perçages (12) et retenus dans ceux-ci, lorsqu'ils ne sont pas en utilisation, par des moyens formant verrou (16).

2. Structure selon la revendication 1, dans laquelle lesdits moyens formant verrou (16) sont formés par un élément de verrou actif monté en pivotement sous la plaque de support (15), ledit élément de verrou actif étant un élément rotatif de forme rectangulaire ayant deux découpes opposées en forme de scalène respectivement prévues sur ses deux extrémités et coopérant avec une projection d'arrêt (18) et avec une paroi de guidage (17) prévue sur ladite plaque de base (11) dans une rainure (11).

3. Structure selon la revendication 2, dans laquelle lesdites parois de guidage (17) sont des rainures de la plaque de base (11).

4. Structure selon l'une quelconque des revendications 1 à 3, dans laquelle des ressorts (13) sont prévus pour le mouvement de la structure vers l'extérieur.

5. Structure selon la revendication 4, dans laquelle le ressort (13) est prévu entre le fond desdits perçages (12) et les éléments coulissants (14).

6. Structure selon l'une quelconque des revendications 1 à 5, dans laquelle ladite troisième lampe de freinage est supportée par un siège de base (4) du type caché dans le coffre arrière d'une automobile ou dans l'espace interne dans la porte arrière d'une automobile.

7. Structure selon la revendication 6, dans laquelle le siège de base (4) possède un intérieur (40) partiellement fermé avec une glissière (44) et un perçage d'engagement (42), et en ce que le ressort (33) est prévu entre une partie arrière du siège de base (4) et le siège de support (3) autour des éléments coulissants (32).

8. Structure selon la revendication 7, dans laquelle le siège de support (3) possède un côté frontal transparent (31).

9. Structure selon la revendication 8, dans laquelle le côté frontal (31) assure une fermeture complète de l'ouverture dans la carrosserie de l'automobile qui porte la structure dans sa position de non-utilisation.

10. Structure selon l'une quelconque des revendications 1 à 9, dans laquelle le siège de base (4/11) est constitué par un boîtier fermé destiné à être fixé à l'arrière d'une automobile.

11. Structure selon l'une quelconque des revendications 1 à 10, dans laquelle ladite troisième lampe de freinage (2) du type à trois tronçons utilise une pluralité de diodes électroluminescentes, et en ce qu'elle est susceptible de clignoter lorsqu'elle est dépliée en une lampe d'avertissement de panne triangulaire.
